(19) **Europäisches Patentamt / European Patent Office / Office européen des brevets**

(11) **EP 4 564 506 B1**

(12) **EUROPEAN PATENT SPECIFICATION**

(45) Date of publication and mention
of the grant of the patent:
**20.05.2026 Bulletin 2026/21**

(21) Application number: **24203730.7**

(22) Date of filing: **30.09.2024**

(51) International Patent Classification (IPC):
**H01M 10/0525** (2010.01)   **H01M 10/0567** (2010.01)
**H01M 10/0568** (2010.01)   **H01M 10/0569** (2010.01)
**H01M 50/578** (2021.01)

(52) Cooperative Patent Classification (CPC):
**H01M 10/0525; H01M 10/0567; H01M 10/0568;**
**H01M 10/0569; H01M 50/578;** H01M 2300/0037;
Y02E 60/10

(54) **SECONDARY BATTERY AND ELECTROCHEMICAL DEVICE**

SEKUNDÄRBATTERIE UND ELEKTROCHEMISCHE VORRICHTUNG

BATTERIE SECONDAIRE ET DISPOSITIF ÉLECTROCHIMIQUE

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **01.12.2023 CN 202311647881**

(43) Date of publication of application:
**04.06.2025 Bulletin 2025/23**

(60) Divisional application:
**26163915.7 / 4 734 273**

(73) Proprietor: **Ningde Amperex Technology Ltd.**
**Ningde City, Fujian 352100 (CN)**

(72) Inventors:
• **WANG, Meirong**
**Ningde City, Fujian Province, People s Republic**
**of**
**China, 352100 (CN)**
• **ZHOU, Shaoyun**
**Ningde City, Fujian Province, People s Republic**
**of**
**China, 352100 (CN)**

(74) Representative: **Icosa**
**83 avenue Denfert-Rochereau**
**75014 Paris (FR)**

(56) References cited:
**EP-B1- 2 304 837      US-A1- 2018 287 118**
**US-B2- 10 418 667**

## Description

### TECHNICAL FIELD

This application relates to the technical field of batteries, and in particular, to a secondary battery and an electrochemical device.

### BACKGROUND

Lithium-ion batteries are characterized by a high energy density, a low maintenance cost, a relatively low self-discharge rate, a long cycle life, no memory effect, a stable working voltage, environmental friendliness, and the like, and therefore, have attracted extensive attention and are widely used in the fields such as portable electronic devices (including electronic products such as a mobile phone, a notebook computer, and a camera), electric tools, and electric vehicles. However, with the rapid development of technology and the diversity of market demand, people have imposed more requirements on the power supply of the electronic products. For example, the power supply is expected to be thinner, lighter, more diverse in shape, and safer, and achieve a higher power, a longer service life, and the like. In a cylindrical battery, as a safety device, a current interrupt device (CID) needs to be actuated effectively in time in unconventional operations or unconventional environments to ensure a safe state of the battery. If the CID fails to be actuated effectively in time, the normal operation of the battery will be disrupted drastically. European patent EP2304837 B1 discloses a secondary battery with such a current interrupt device an an electrolyte solution, where the electrolyte solution comprises a chain ester.

### SUMMARY

In view of the situation above, this application provides a secondary battery and an electrochemical device, takes advantage of inherent characteristics of a solvent in an electrolyte solution, sets a trigger pressure of the CID to an appropriate range so that the electrolyte solution adapts to the trigger pressure of the CID, so as to ensure normal operation of the battery and improve the high-temperature cycle performance of the secondary battery concurrently. The normal operation means that the battery can be disconnected in time during an overcharge test and remain electrically connected during a high-temperature storage test.

According to a first aspect, this application provides a secondary battery. The secondary battery includes a current interrupt device. A trigger pressure of the current interrupt device is a kPa, satisfying: $1 \leq a \leq 4$. The secondary battery contains an electrolyte solution. The electrolyte solution includes a chain ester. A saturation vapor pressure of the chain ester at 25 °C ranges from 4 kPa to 100 kPa. Based on a mass of the electrolyte solution, a mass percent of the chain ester is b%, satisfying: $35 \leq b \leq 80$. Optionally, the secondary battery satisfies $1.1 \leq a \leq 2.5$ or $48 \leq b \leq 80$. In a cylindrical battery, when the trigger pressure of the CID is relatively high and the content of a chain ester with a relatively high vapor pressure in an electrolyte solution is unduly low, the CID is unable to be actuated in time under an abnormal operating condition (such as overcharging, thermal runaway, or impact), and is unable to put the battery in a safe open-circuit state. When the trigger pressure of the CID is relatively low and the content of the chain ester with a relatively high vapor pressure in the electrolyte solution is unduly high, the CID may be disconnected abnormally under normal operating conditions, thereby disrupting normal operation of the battery. Therefore, this application takes advantage of characteristics of a saturation vapor pressure of the chain ester, and sets the trigger pressure of the CID to an appropriate range, thereby ensuring normal operation of the battery and improving the safety performance of the battery concurrently.

In some embodiments, the secondary battery satisfies: $43 \leq b/a \leq 58$. In a cylindrical battery, when a ratio of the content of the high-saturation-vapor-pressure solvent (that is, the chain ester with a saturation vapor pressure ranging from 4 kPa to 100 kPa at 25 °C) to the trigger pressure of the CID falls within the above range, the pass rate of the batteries in a CID adaptability test can be improved significantly by virtue of a synergistic relationship between the content of the high-saturation-vapor-pressure solvent and the trigger pressure of the CID. The pass rate in a CID adaptability test means a pass rate of the batteries satisfying the following conditions concurrently: being able to be disconnected in time during an overcharge test, and keeping electrically connected during a high-temperature storage test.

In some embodiments, the chain ester includes a chain carbonate. The chain carbonate includes dimethyl carbonate and/or ethyl methyl carbonate. Based on the mass of the electrolyte solution, a mass percent of the chain carbonate is $b_1$%, satisfying: $15 \leq b_1 \leq 70$, and preferably satisfying: $40 \leq b_1 \leq 55$.

In some embodiments, the chain ester includes a chain carboxylate. The chain carboxylate includes at least one of ethyl acetate, methyl acetate, ethyl formate, methyl formate, methyl propionate, ethyl propionate, propyl propionate, or propyl formate. Based on the mass of the electrolyte solution, a mass percent of the chain carboxylate is $b_2$%, satisfying: $5 \leq b_2 \leq 45$, and preferably satisfying: $20 \leq b_2 \leq 30$.

In a cylindrical battery, when the content of the chain carbonate and/or the chain carboxylate in the electrolyte solution falls within the above range, the kinetic advantages of the solvent with a high saturation vapor pressure can be maximally exerted to meet the requirements such as a high infiltration effect and a low temperature increment of the battery, and improve the overall performance of the battery, especially the high-temperature cycle performance of the battery.

In some embodiments, the electrolyte solution further includes a substance A. The substance A is at least one selected from 1,3-propane sultone (1,3-PS), 1,3-propene sultone, ethylene sulfate, 1,3-propylene glycol cyclic sulfate, 2,4-butane sultone, 1,4-butane sultone, vinylene carbonate (VC), or fluoroethylene carbonate (FEC). Based on the mass of the electrolyte solution, a mass percent of the substance A is x%, satisfying: $1 \leq x \leq 13$. When the content of the substance A in the electrolyte solution falls within the above range, the high-temperature cycle performance of the battery is further improved. Preferably, $5 \leq x \leq 10$.

In some embodiments, the secondary battery satisfies: $0.8 \leq x/a \leq 10$, and preferably satisfies: $6.5 \leq x/a \leq 8.5$.

In some embodiments, the electrolyte solution further includes a substance B. The substance B is at least one selected from LiBOB, LiBF$_4$, LiDFOB, LiPO$_2$F$_2$, LiFSI, LiTFSI, LiCF$_3$SO$_3$, LiTDI, or Li$_2$B$_4$O$_7$. Based on the mass of the electrolyte solution, a mass percent of the substance B is y%, satisfying: $0.01 \leq y \leq 7$. When the content of the substance B in the electrolyte solution falls within the above range, the high-temperature cycle performance of the battery is further improved. In some embodiments, the secondary battery satisfies: $0.65 \leq y/a \leq 6$, and preferably satisfies: $1.8 \leq y/a \leq 4.2$.

In some embodiments, the electrolyte solution further includes other constituents and a lithium salt. The other constituents are at least one selected from ethylene carbonate, propylene carbonate, or diethyl carbonate. The lithium salt includes lithium hexafluorophosphate. Based on the mass of the electrolyte solution, a mass percent of the lithium salt is 10% to 15%, and the remaining content is contributed by other constituents.

According to a second aspect, this application provides an electrochemical device. The electrochemical device includes the secondary battery.

The technical solutions provided in some embodiments of this application bring at least the following beneficial effects:

This application provides a secondary battery and an electrochemical device. The secondary battery includes a current interrupt device (CID). This application regulates both the trigger pressure of the CID of the battery cell and the content of the chain ester with a high vapor pressure in the electrolyte solution to appropriate values, thereby taking advantage of the synergistic relationship between the solvent with a high vapor pressure in the electrolyte solution and the trigger pressure of the CID, improving the pass rate of the battery cells in an overcharge test and a high-temperature storage test, exerting the kinetic advantages of the solvent with a high saturation vapor pressure on the premise of ensuring high safety performance, and ultimately improving the overall performance of the battery.

## DETAILED DESCRIPTION OF EMBODIMENTS

To make the objectives, technical solutions, and advantages of this application clearer, the following describes this application in more detail with reference to embodiments and comparative embodiments. Understandably, the specific embodiments described herein are merely intended to explain this application, but not to limit this application.

When the mass percent of the solvent with a relatively high vapor pressure in the electrolyte solution is higher, the viscosity of the electrolyte solution is lower, and the current interrupt device (CID) is actuated more easily in a case of thermal runaway, so as to keep the battery in a safe open-circuit state. In addition, the low viscosity of the electrolyte solution improves the infiltration effect and kinetic performance of the battery. However, when the mass percent of the solvent with a relatively high vapor pressure in the electrolyte solution is unduly high, the CID may be actuated at normal operating temperatures, thereby drastically disrupting the normal operation of the battery. To solve the above technical problem, this application provides a secondary battery and an electrochemical device, takes advantage of inherent characteristics of a solvent in an electrolyte solution, sets a trigger pressure of the CID to an appropriate range so that the electrolyte solution adapts to the trigger pressure of the CID, so as to ensure normal operation of the battery and improve the high-temperature cycle performance of the secondary battery concurrently.

Secondary battery

The secondary battery includes a cylindrical housing, and an electrode assembly and an electrolyte solution disposed inside the cylindrical housing. A top cap portion is disposed at an opened upper end of the cylindrical housing. The top cap portion includes a current interrupt device (CID). A trigger pressure of the current interrupt device is a kPa, satisfying: $1 \leq a \leq 4$. As an example, the trigger pressure of the current interrupt device is 1 kPa, 1.1 kPa, 1.3 kPa, 1.5 kPa, 1.8 kPa, 2 kPa, 2.3 kPa, 2.5 kPa, 2.8 kPa, 3 kPa, 3.5 kPa, 4 kPa, or a value falling within a range formed by any two thereof.

The electrode assembly assumes a jelly-roll structure formed by winding a positive electrode plate, a negative electrode plate, and a separator sandwiched in between. The positive electrode plate in the electrode assembly is attached to a lower surface of the current interrupt device.

The electrolyte solution contains a chain ester. A saturation vapor pressure of the chain ester at 25 °C ranges from 4 kPa to 100 kPa. Based on a mass of the electrolyte solution, a mass percent of the chain ester is b%, satisfying: $35 \leq b \leq 80$. As an example, the saturation vapor pressure of the chain ester at 25 °C is 4 kPa, 5 kPa, 10 kPa, 20 kPa, 30 kPa, 40 kPa, 60 kPa, 80 kPa, 100 kPa, or a value falling within a range formed by any two thereof. As an example, the mass percent of the chain ester is 35%, 40%, 45%, 48%, 50%, 55%, 60%, 65%, 70%, 73%, 75%, 80%, or a value falling within a range formed by any two thereof.

In some embodiments, the secondary battery satisfies: $43 \leq b/a \leq 58$. As an example, a ratio of the mass percent b of the chain ester to the trigger pressure a of the current interrupt device, denoted as b/a, is 43, 44, 45, 48, 50, 53, 55, 58, or a value falling within a range formed by any two thereof.

In some embodiments, the chain ester includes a chain carbonate. The chain carbonate includes dimethyl carbonate and/or ethyl methyl carbonate. Based on the mass of the electrolyte solution, a mass percent of the chain carbonate is $b_1$%, satisfying: $15 \leq b_1 \leq 70$, and As an example, the mass percent of the chain carbonate is 15%, 18%, 20%, 25%, 30%, 35%, 40%, 45%, 50%, 55%, 60%, 70%, or a value falling within a range formed by any two thereof.

In some embodiments, the chain ester includes a chain carboxylate. The chain carboxylate includes at least one of ethyl acetate, methyl acetate, ethyl formate, methyl formate, methyl propionate, ethyl propionate, propyl propionate, or propyl formate. Based on the mass of the electrolyte solution, a mass percent of the chain carboxylate is $b_2$%, satisfying: $5 \leq b_2 \leq 45$, and As an example, the mass percent of the chain carboxylate is 5%, 10%, 15%, 20%, 25%, 30%, 35%, 40%, 45%, or a value falling within a range formed by any two thereof.

In some embodiments, the electrolyte solution further includes a substance A. The substance A is at least one selected from 1,3-propane sultone, 1,3-propene sultone, ethylene sulfate, 1,3-propylene glycol cyclic sulfate, 2,4-butane sultone, 1,4-butane sultone, vinylene carbonate, or fluoroethylene carbonate. Based on the mass of the electrolyte solution, a mass percent of the substance A is x%, satisfying: $1 \leq x \leq 13$. As an example, the mass percent of the substance A is 1%, 3%, 4%, 5%, 6%, 7%, 8%, 9%, 10%, 13%, or a value falling within a range formed by any two thereof.

In some embodiments, the secondary battery satisfies: $0.8 \leq x/a \leq 10$. As an example, a ratio of the mass percent x of the substance A to the trigger pressure a of the current interrupt device, denoted as x/a, is 0.8, 0.9, 1, 2, 3, 4, 5, 6.5, 7, 8, 8.5, 9, 10, or a value falling within a range formed by any two thereof.

In some embodiments, the electrolyte solution further includes a substance B. The substance B primarily serves as an additive constituent. The substance B is at least one selected from lithium bis(oxalato)borate (LiBOB), lithium tetrafluoroborate ($LiBF_4$), lithium difluoro(oxalato)borate (LiDFOB), lithium difluorophosphate ($LiPO_2F_2$), lithium bis(fluorosulfonyl)imide (LiFSI), lithium bis(trifluoromethanesulfonyl)imide (LiTFSI), lithium trifluoromethanesulfonate ($LiCF_3SO_3$), lithium 4,5-dicyano-2-(trifluoromethyl)imidazole (LiTDI), or lithium tetraborate ($Li_2B_4O_7$). Based on the mass of the electrolyte solution, a mass percent of the substance B is y%, satisfying: $0.01 \leq y \leq 7$. As an example, the mass percent of the substance B is 0.01%, 0.05%, 0.1%, 1%, 2%, 3%, 4%, 5%, 6%, 7%, or a value falling within a range formed by any two thereof.

In some embodiments, the secondary battery satisfies: $0.65 \leq y/a \leq 6$. As an example, a ratio of the mass percent y of the substance B to the trigger pressure a of the current interrupt device, denoted as y/a, is 0.65, 0.8, 1.8, 2, 2.5, 3, 3.5, 4, 4.2, 5, 5.5, 6, or a value falling within a range formed by any two thereof.

In some embodiments, the electrolyte solution further includes other constituents and a lithium salt. The other constituents are at least one selected from ethylene carbonate, propylene carbonate, or diethyl carbonate. The lithium salt includes lithium hexafluorophosphate. Based on the mass of the electrolyte solution, a mass percent of the lithium salt is 10% to 15%, and the remaining content is contributed by other constituents.

Others

The positive electrode plate includes a positive current collector and a positive active material layer disposed on a surface of the positive current collector. The positive current collector is not particularly limited herein, as long as the objectives of this application can be achieved. For example, the positive current collector may include aluminum foil, aluminum alloy foil, a composite current collector (for example, a composite current collector formed by a metal-clad polymer), or the like. The thickness of the positive current collector is not particularly limited herein, as long as the objectives of this application can be achieved. For example, the thickness of the positive current collector is 5 $\mu$m to 12 $\mu$m. The positive active material layer includes a positive active material. The positive active material is not particularly limited herein as long as the objectives of this application can be achieved. For example, the positive active material may include, but is not limited to, at least one of lithium nickel cobalt manganese oxide (for example, typically NCM811, NCM622, NCM523, NCM111), lithium nickel cobalt aluminum oxide, lithium iron phosphate, a lithium-rich manganese-based material, lithium cobalt oxide, lithium manganese oxide, or lithium manganese iron phosphate. The thickness of the positive active material layer is not particularly limited herein, as long as the objectives of this application can be achieved. For example, the thickness of the positive active material layer is 30 $\mu$m to 120 $\mu$m. The positive active material layer may further include a conductive agent and a binder. The types of the conductive agent and the binder are not particularly limited herein, as long as the objectives of this application can be achieved. For example, the conductive agent may include, but is not limited to, at least one of conductive carbon black, carbon nanotubes (CNTs), carbon fibers, Ketjen black, graphene, a metal material, or a conductive polymer. The binder may include, but is not limited to, at least one of polyacrylic acid, polyacrylate, an acrylate polymer, polyvinyl alcohol, polyvinylidene difluoride, polytetrafluoroethylene, or poly(vinylidene fluoride-co-hexafluoropropylene). The mass percentages of the positive active material, conductive agent, or binder in the positive active material layer are not particularly limited herein, and may be selected by a person skilled in the art as actually required, as long as the objectives of this application can be achieved.

The negative electrode plate includes a negative current collector and a negative active material layer disposed on a surface of the negative current collector. The negative active material layer includes a negative active material. The negative active material includes a silicon-based material. The negative current collector is not particularly limited herein, as long as the objectives of this application can be achieved. For example, the negative current collector may include copper foil, copper alloy foil, nickel foil, stainless steel foil, titanium foil, foamed nickel, foamed copper, or a composite current collector (for example, a composite current collector formed by a metal-clad polymer), or the like. The thickness of the negative current collector is not particularly limited herein as long as the objectives of this application can be achieved. For example, the thickness of the negative current collector is 5 $\mu$m to 12 $\mu$m. In some embodiments, the silicon-based material includes at least one of simple-substance silicon, a silicon-oxygen composite material, or a silicon-carbon composite material. In some embodiments, the negative active material may further include other negative active materials known in the art other than the foregoing silicon-based materials. For example, the other negative active materials known in the art may include, but are not limited to, at least one of natural graphite, artificial graphite, mesocarbon microbeads, hard carbon, soft carbon, Li-Sn alloy, Li-Sn-O alloy, or Li-Al alloy. In some embodiments, based on the mass of the negative active material, a mass percent of the silicon-based material is 2% to 30%. The negative active material layer may further include a binder and a thickener. The types of the binder and thickener are not particularly limited herein, as long as the objectives of this application can be achieved. For example, the binder may include, but is not limited, to at least one of polyvinyl alcohol, polyvinyl chloride, carboxylated polyvinyl chloride, polyvinyl fluoride, polyvinylpyrrolidone, polyurethane, polytetrafluoroethylene, polyvinylidene difluoride, styrene-butadiene rubber, or acrylated styrene-butadiene rubber. The thickener may include, but is not limited to, at least one of sodium carboxymethyl cellulose or lithium carboxymethyl cellulose. The negative active material layer may further include a conductive agent. The type of the conductive agent is not particularly limited herein, as long as the objectives of this application can be achieved. For example, the conductive agent may include, but is not limited to, at least one of conductive carbon black, carbon nanotubes (CNTs), carbon fibers, Ketjen black, graphene, a metal material, or a conductive polymer. The mass percentages of the negative active material, binder, conductive agent, and thickener in the negative active material layer are not particularly limited herein, and may be selected by a person skilled in the art as actually required, as long as the objectives of this application can be achieved.

The type of the separator is not particularly limited herein, and may be any well-known porous separator that is stable both electrochemically and chemically.

The electrochemical device of this application may include any device in which an electrochemical reaction occurs. Specific examples of the electrochemical device include all types of primary batteries or secondary batteries. In particular, the electrochemical device is a lithium secondary battery, including a lithium metal secondary battery, a lithium-ion secondary battery, a lithium polymer secondary battery, or a lithium-ion polymer secondary battery.

The implementations of this application are described below in more detail with reference to embodiments and comparative embodiments. Unless otherwise specified, each of the parts, percentages, and ratios set out herein represents a content by mass.

**Embodiment 1**

**I. Preparing a lithium-ion battery**

**Preparing a positive electrode plate**

Dissolving lithium nickel cobalt manganese oxide $LiNi_{0.8}Co_{0.1}Mn_{0.1}O_2$ as a positive active material, polyvinylidene difluoride (PVDF) as a binder, and Super-P as a conductive agent at a mass ratio of 96: 2: 2 in N-methyl-pyrrolidone (NMP). Stirring well to produce a positive electrode slurry. Coating one surface of 11 $\mu$m-thick positive current collector aluminum foil with the positive electrode slurry evenly, and drying the foil at 120 °C to obtain a positive electrode plate coated with a positive active material layer on a single side. Subsequently, repeating the foregoing steps on the other surface of the aluminum foil to obtain a positive electrode plate coated with the positive active material layer on both sides, and then performing compaction and slitting to obtain a positive electrode plate that is 59.1 mm $\times$ 1248 mm in size.

### Preparing a negative electrode plate

Dissolving the graphite as a negative active material, sodium carboxymethyl cellulose (CMC) as a thickener, and styrene-butadiene rubber as a binder in water at a mass ratio of 97.4: 1.2: 1.4, and stirring well to obtain a negative electrode slurry. Coating one surface of 10 $\mu$m-thick negative current collector copper foil with the negative electrode slurry evenly, and drying the foil at 120 °C to obtain a negative electrode plate coated with a negative active material layer on a single side. Subsequently, repeating the foregoing steps on the other surface of the copper foil to obtain a negative electrode plate coated with the negative active material layer on both sides, and then performing compaction and slitting to obtain a negative electrode plate that is 60.9 mm × 1294 mm in size.

### Preparing an electrolyte solution

Mixing other constituents of the electrolyte solution with a chain ester (the saturation vapor pressure of the chain ester at 25 °C is 4 to 100 KPa) at a specified mass ratio in an argon atmosphere glovebox in which the water content is less than 10 ppm, and then dissolving a well-dried lithium salt $LiPF_6$ in the above nonaqueous solvent to produce an electrolyte solution. Based on the mass of the electrolyte solution, the mass percent of the lithium salt $LiPF_6$ is 12.5%. The specific substances and the mixing ratios between the substances are set out in Table 1A and Table 1B.

### Preparing a lithium-ion battery

Using a 10 $\mu$m-thick polypropylene porous film as a separator. Stacking the positive electrode plate, separator, and negative electrode plate sequentially in such a way that the separator is located between the positive electrode plate and the negative electrode plate to serve a function of separation, and winding the stacked structure to form an electrode assembly. Putting the electrode assembly into a cylindrical housing. Fitting a top cap portion containing a current interrupt device (CID) onto an opening end of the cylindrical housing. Attaching a positive electrode plate among the two electrode plates to a lower surface of the CID. Injecting the electrolyte solution prepared above into the dried cylindrical battery. Performing vacuum packaging, static standing, chemical formation, shaping and other steps to produce a lithium-ion battery as a specimen to be tested.

The chemical formation steps are as follows: performing a first charge-and-discharge cycle at 45±5 °C according to the following process: first, charging the battery at a constant current rate of 0.1 C for 10 minutes, and then charging the battery at a constant current rate of 0.5 C until the voltage reaches 4.6 V (denoted as Q), charging the battery at a constant voltage until the current is less than or equal to 0.05 C, and then discharging the battery at a constant current rate of 0.5 C until the voltage reaches 2.5 V

### II. Test Part

#### 2.1 Testing the trigger pressure of the CID

Pneumatic blasting machine model: GY-5.0/4B, manufacturer: Zhaoqing Xinlida Electronic Machinery Co., Ltd. Test: Performing a CID flip-over pressure test by using a pneumatic blasting machine at a pressurization speed of 7 Mps/min. For specific operations, reference may be made to the prior art, and details are omitted here.

#### 2.2 Performance test

(1) Testing adaptability of the CID

The CID adaptability test includes an overcharge test and a thermal safety test. The lithium-ion battery is evaluated as passing the CID adaptability test if the battery is disconnected in time during the overcharge test and keeps connected during the thermal safety test (that is, high-temperature storage test).

(a) Overcharge test

Putting the lithium-ion battery to be tested in a 20 °C (±5 °C) environment, discharging the battery at a current of 0.5 C until the voltage reaches 2.5 V, and leaving the battery to stand for 5 minutes. Subsequently, putting the battery in a 60 °C (±5 °C) environment, charging the battery at a direct current of 9A until a voltage of 30 V, and then keeping charging at a constant voltage (CV) for 7 hours. Recording the voltage and internal resistance before and after the test. If the voltage is 0 and the internal resistance is infinitely great, it indicates that the CID is disconnected. CV is an acronym of constant voltage.

(b) Thermal safety test

Putting a lithium-ion battery to be tested in a 20 °C ($\pm$5 °C) environment, charging the battery at a current of 0.5 C until the voltage reaches 4.2 V, and then charging the battery at a constant voltage until the current drops to 0.05 C. Leaving the battery to stand for 30 minutes. Discharging the battery at a current of 0.5 C until a voltage of 2.5 V, and leaving the battery to stand for 60 minutes. Subsequently, charging the battery at a current of 0.5 C until a voltage of 4.2 V, and then charging the battery at a constant voltage until the current drops to 0.05 C. Affixing a thermocouple wire to the center of a surface of the battery cell. Placing the specimen vertically in the box, increasing the temperature to 110°C ($\pm$2 °C) at a speed of 5 °C ($\pm$2 °C), and keeping the temperature constant for 24 hours. Recording the voltage and internal resistance before and after the test. If the voltage is 0 and the internal resistance is infinitely great, it indicates that the CID is disconnected.

Method for calculating the CID adaptability test pass rate: If the CID disconnection rate is 100% in the overcharge test and the CID disconnection rate is 0% in the high-temperature storage test, it is determined that the CID adaptability test pass rate is 100%. If the CID disconnection rate in the overcharge test is not 100% or the CID disconnection rate in the high-temperature storage test is not 0%, the CID adaptability test pass rate is calculated specifically based on the actual situation. For example, if the CID disconnection rate in the overcharge test is 83/100 (that is, 83 of 100 specimens are disconnected in the overcharge test) and the CID disconnection rate in the high-temperature storage test is 7/100 (that is, 7 of 100 identical specimens are disconnected in the high-temperature storage test), the CID adaptability test pass rate is (83 + 93)/(100 + 100) $\times$ 100% = 88%.

(2) High-temperature cycle test

Performing the test at a temperature of 45 °C according to the following steps: 1) charging the battery at a constant current of 8A until the voltage reaches 4.2 V, and then charging the battery at a constant voltage until the current drops to 0.05 C; 2) leaving the battery to stand for 30 minutes; 3) charging the battery at a constant current of 29.5 A until the voltage reaches 2.5 V; 4) leaving the battery to stand for 30 minutes; and 5) regarding steps 1) to 4) as one cycle, and repeating the above steps to complete 1500 cycles. If the voltage test cabinet shows a sudden voltage change to 0 during the test, it indicates an abnormal CID disconnection.

$n^{th}$-cycle capacity retention rate = ($n^{th}$-cycle discharge capacity/first-cycle discharge capacity) $\times$ 100%. $400^{th}$-cycle capacity retention rate = ($400^{th}$-cycle discharge capacity/first-cycle discharge capacity) $\times$ 100%.

**Table 1A Investigation on trigger pressure of CID and content of solvent with a high saturation vapor pressure (To Be Continued)**

|  | Chain ester | |
| --- | --- | --- |
|  | Type | Content b (%) |
| Comparative Embodiment 1 | Ethyl acetate + dimethyl carbonate | 30 (mass ratio 3: 13) |
| Comparative Embodiment 2 | Ethyl acetate + dimethyl carbonate | 85 (mass ratio 3: 13) |
| Comparative Embodiment 3 | Ethyl acetate + dimethyl carbonate | 48 (mass ratio 3: 13) |
| Embodiment 1 | Ethyl acetate + dimethyl carbonate | 35 (mass ratio 3: 13) |
| Embodiment 2 | Ethyl acetate + dimethyl carbonate | 48 (mass ratio 3: 13) |
| Embodiment 3 | Ethyl acetate + dimethyl carbonate | 62 (mass ratio 3: 13) |
| Embodiment 4 | Ethyl acetate + dimethyl carbonate | 74 (mass ratio 3: 13) |
| Embodiment 5 | Ethyl acetate + dimethyl carbonate | 80 (mass ratio 3: 13) |
| Embodiment 6 | Ethyl acetate + dimethyl carbonate | 70 (mass ratio 3: 13) |
| Embodiment 7 | Ethyl acetate + dimethyl carbonate | 75 (mass ratio 3: 13) |
| Embodiment 8 | Dimethyl carbonate | 48 |
| Embodiment 9 | Ethyl acetate | 48 |
| Embodiment 10 | Methyl formate + ethyl methyl carbonate | 55 (mass ratio 3: 13) |
| Embodiment 11 | Ethyl acetate + dimethyl carbonate | 75 (mass ratio 3: 13) |

(continued)

| | Chain ester | |
|---|---|---|
| | Type | Content b (%) |
| Embodiment 12 | Ethyl acetate + dimethyl carbonate | 80 (mass ratio 3: 13) |

**Table 1B Investigation on trigger pressure of CID and content of solvent with a high saturation vapor pressure (Continued)**

| | Other constituents of electrolyte solution and mass percent (%) | | Trigger pressure a (kPa) | b/a | CID adaptability test pass rate | High-temperature cycle capacity retention rate (400 cls) |
|---|---|---|---|---|---|---|
| Comparative Embodiment 1 | Ethylene carbonate | 57.5 | 2 | 15.00 | 42% | 65% |
| Comparative Embodiment 2 | Ethylene carbonate | 2.5 | 2 | 42.5 | 46% | 72% |
| Comparative Embodiment 3 | Ethylene carbonate | 39.5 | 0.8 | 60 | 55% | Test was disrupted (the CID was disconnected at the 324th cycle) |
| Embodiment 1 | Ethylene carbonate | 52.5 | 1 | 35 | 63% | 77% |
| Embodiment 2 | Ethylene carbonate | 39.5 | 1.1 | 43.64 | 82% | 80% |
| Embodiment 3 | Ethylene carbonate | 25.5 | 1.2 | 51.67 | 94% | 86% |
| Embodiment 4 | Ethylene carbonate | 13.5 | 2.3 | 29.6 | 70% | 73% |
| Embodiment 5 | Ethylene carbonate | 7.5 | 2.5 | 32 | 74% | 73% |
| Embodiment 6 | Ethylene carbonate | 17.5 | 3 | 23.33 | 56% | 78% |
| Embodiment 7 | Propylene carbonate | 12.5 | 3.5 | 21.43 | 60% | 75% |
| Embodiment 8 | Ethylene carbonate | 39.5 | 1.1 | 43.64 | 80% | 79% |
| Embodiment 9 | Ethylene carbonate | 39.5 | 1.1 | 43.64 | 79% | 80% |
| Embodiment 10 | Ethylene carbonate | 32.5 | 1.3 | 42.31 | 81% | 83% |
| Embodiment 11 | Ethylene carbonate | 12.5 | 1.3 | 57.69 | 86 | 78% |
| Embodiment 12 | Ethylene carbonate | 7.5 | 1.2 | 66.66 | 67 | 71% |

With reference to Table 1A and Table 1B, as can be seen from Comparative Embodiments 1 to 3 versus Embodiment 1, the trigger pressures in both Comparative Embodiment 1 and Comparative Embodiment 2 are appropriate, but the content of the chain ester falls outside the appropriate range. Consequently, the CID adaptability test pass rates in both Comparative Embodiment 1 and Comparative Embodiment 2 are relatively low, and no more than 50%. The content of the chain ester in Comparative Embodiment 3 is appropriate, but the trigger pressure in Comparative Embodiment 3 is unduly low. Consequently, the CID adaptability test pass rate in Comparative Embodiment 3 is as low as 55%. In Embodiment 1, the trigger pressure of the current interrupt device is in an appropriate range, and the content of the chain ester in the electrolyte solution is also appropriate, thereby ensuring that the battery is disconnected in time in the overcharge test and keeps connected during the 110 °C high-temperature storage test, and facilitating safe operation of the battery.

As can be seen from Embodiments 2 and 3 versus Embodiment 1, in Embodiments 2 and 3, the ranges of the trigger pressure (value a) of the CID and the content (value b) of the chain ester are further adjusted, thereby implementing more efficient synergy between the content of the solvent with an appropriate saturation vapor pressure and the trigger pressure of the CID, and significantly improving the CID adaptability test pass rate to 80% or above. Especially, in Embodiment 3, the CID adaptability test pass rate is as high as 94%, and the high-temperature cycle performance is also up to 86%. Evidently, the synergy between the content of the solvent with an appropriate saturation vapor pressure and the trigger pressure of the CID can ensure the safe operation of the battery and also maximally exert the kinetic advantage of the solvent with a high saturation vapor pressure, thereby improving the overall performance, especially the high-temperature cycle performance, of the battery.

As can be seen from Embodiments 8 and 9 versus Embodiment 2, when the content of the solvent with an appropriate saturation vapor pressure and the trigger pressure of the CID are both within appropriate ranges, the CID adaptability test pass rate is high, and the high-temperature cycle performance of the lithium-ion battery is increased to 80% or above.

As can be seen from Embodiments 2 and 3 versus Embodiments 11 and 12, adjusting the ratio between the content of the chain ester and the trigger pressure to a more appropriate value can implement more efficient synergy between the content of the solvent with a high saturation vapor pressure and the trigger pressure of the CID, and make the CID adaptability test pass rate not less than 80%.

Embodiments 13 to 19 in Table 2A and Table 2B make further adjustments on the solvent in the electrolyte solution on the basis of Embodiment 3. The specific parameters are shown in Table 2A and Table 2B.

Table 2A Investigation on content of chain carbonate and chain carboxylate (To Be Continued)

|  | Chain carbonate | | Chain carboxylate | |
|  | Type | Content $b_1$ (%) | Type | Content $b_2$ (%) |
|---|---|---|---|---|
| Embodiment 3 | Dimethyl carbonate | 51 | Ethyl acetate | 11 |
| Embodiment 13 | Ethyl methyl carbonate | 15 | Methyl acetate | 40 |
| Embodiment 14 | Ethyl methyl carbonate | 40 | Methyl acetate | 27 |
| Embodiment 15 | Ethyl methyl carbonate | 55 | Methyl acetate | 20 |
| Embodiment 16 | Ethyl methyl carbonate | 70 | Methyl acetate | 10 |
| Embodiment 17 | Dimethyl carbonate | 63 | Ethyl acetate | 5 |
| Embodiment 18 | Dimethyl carbonate | 46 | Ethyl acetate | 19 |
| Embodiment 19 | Dimethyl carbonate | 20 | Ethyl acetate | 45 |

**Table 2B Investigation on content of chain carbonate and chain carboxylate (Continued)**

|  | Other constituents of electrolyte solution and mass percent (%) | | CID adaptability test pass rate | High-temperature cycle capacity retention rate (400 cls) |
|  | Type | Content (%) | | |
|---|---|---|---|---|
| Embodiment 3 | Ethylene carbonate | 25.5 | 94% | 86% |
| Embodiment 13 | Ethylene carbonate | 32.5 | 78% | 72% |
| Embodiment 14 | Ethylene carbonate | 20.5 | 89% | 83% |
| Embodiment 15 | Ethylene carbonate | 12.5 | 81% | 78% |
| Embodiment 16 | Ethylene carbonate | 7.5 | 76% | 71% |
| Embodiment 17 | Ethylene carbonate | 19.5 | 79% | 73% |
| Embodiment 18 | Ethylene carbonate | 22.5 | 88% | 84% |

(continued)

| | Other constituents of electrolyte solution and mass percent (%) | | CID adaptability test pass rate | High-temperature cycle capacity retention rate (400 cls) |
|---|---|---|---|---|
| | Type | Content (%) | | |
| Embodiment 19 | Ethylene carbonate | 22.5 | 78% | 77% |

As can be seen from Table 2A and Table 2B, adjusting the content of the chain carbonate and chain carboxylate in the electrolyte solution to a more appropriate range further improves the CID adaptability test pass rate and high-temperature cycle performance of the lithium-ion batteries.

Embodiments 20 to 27 in Table 3 make adjustments on the basis of Embodiment 18. It is hereby noted that when the dosage of the substance A increases, the content of other constituents in the electrolyte solution is reduced by an equivalent amount, and the aggregate mass percent of all constituents in the electrolyte solution is always 100%. As an example, in Embodiment 20, other constituents in the electrolyte solution are ethylene carbonate. The content of ethylene carbonate is 17.5%, calculated by subtracting 5% from 22.5%. Calculations in other embodiments may be performed by reference to the above method, details of which are omitted here. Detailed parameters are set out in Table 3.

**Table 3 Investigation on the content of the substance A**

| | Substance A and content thereof (%) | | x (%) | x/a | CID adaptability test pass rate | High-temperature cycle capacity retention rate (400 cls) |
|---|---|---|---|---|---|---|
| Embodiment 18 | / | / | / | 0 | 88% | 84% |
| Embodiment 20 | 1,3-PS | 5 | 5 | 4.17 | 90% | 85% |
| Embodiment 21 | FEC + 1,3-PS | 0.5+0.5 | 1 | 0.83 | 88% | 87% |
| Embodiment 22 | FEC + 1,3-PS | 1.5+1.5 | 3 | 2.50 | 91% | 87% |
| Embodiment 23 | FEC + 1,3-PS | 3.5+1.5 | 5 | 4.17 | 91% | 88% |
| Embodiment 24 | FEC + 1,3-PS + VC | 6.5+1.5 | 8 | 6.67 | 92% | 89% |
| Embodiment 25 | FEC + 1,3-PS | 8.5+1.5 | 10 | 8.33 | 92% | 89% |
| Embodiment 26 | FEC + 1,3-PS + VC + DTD | 6.5+2.5+1+1 | 11 | 10.83 | 80% | 83% |
| Embodiment 27 | FEC + 1,3-PS + VC + DTD | 7.5+4.5+1+1 | 13 | 12.50 | 78% | 79% |

In Table 3, 1,3-PS is an abbreviation of 1,3-propane sultone, VC is an abbreviation of vinylene carbonate, and FEC is an abbreviation of fluoroethylene carbonate.

As can be seen from Table 3, the electrolyte solution in Embodiment 18 is further doped with the substance A, and the content of the substance A is controlled to fall within an appropriate range, thereby facilitating adaptation between the electrolyte solution and the trigger pressure of the CID, and in turn, improving the CID adaptability test pass rate and high-temperature performance of the lithium-ion battery. An inappropriate dosage of the substance A deteriorates the CID adaptability test pass rate and high-temperature cycle capacity retention rate of the lithium-ion battery.

Embodiments 28 to 33 in Table 4 make adjustments on the basis of Embodiment 18. It is hereby noted that when the dosage of the substance B increases, the content of other constituents in the electrolyte solution is reduced by an equivalent amount, and the aggregate mass percent of all constituents in the electrolyte solution is always 100%. As an example, in Embodiment 30, other constituents in the electrolyte solution are ethylene carbonate. The content of ethylene carbonate is 20.5%, calculated by subtracting 2% from 22.5%. Calculations in other embodiments may be performed by reference to the above method, details of which are omitted here. For details, refer to Table 4.

**Table 4 Investigation on the content of the substance B**

| | Substance B and content thereof (%) | | y (%) | y/a | CID adaptability test pass rate | High-temperature cycle capacity retention rate (400 cls) |
|---|---|---|---|---|---|---|
| Embodiment 18 | / | / | 0 | 0 | 88% | 84% |
| Embodiment 28 | $LiPO_2F_2$ | 0.01 | 0.01 | 0.008 | 89% | 85% |
| Embodiment 29 | $LiPO_2F_2$ | 0.8 | 0.8 | 0.67 | 90% | 85% |
| Embodiment 30 | $LiFSI + LiPO_2F_2$ | 1.2+0.8 | 2 | 1.67 | 91% | 85% |
| Embodiment 31 | $LiFSI + LiBF_4$ | 4.8+0.2 | 5 | 4.17 | 92% | 88% |
| Embodiment 32 | $LiFSI + LiPO_2F_2$ | 6.2+0.8 | 7 | 5.83 | 88% | 80% |
| Embodiment 33 | $LiFSI + LiPO_2F_2$ | 8.2+0.8 | 9 | 7.5 | 84% | 78% |

As can be seen from Table 4, the electrolyte solution in Embodiment 18 is further doped with the substance B, and the content of the substance B is controlled to fall within an appropriate range, thereby facilitating adaptation between the electrolyte solution and the trigger pressure of the CID, and in turn, improving the CID adaptability test pass rate and high-temperature performance of the lithium-ion battery. An inappropriate dosage of the substance B deteriorates the CID adaptability test pass rate and high-temperature cycle capacity retention rate of the lithium-ion battery.

In the accompanying drawings of this application, the same or similar reference numerals represent the same or similar components. In the description of this application, understandably, a direction or positional relationship indicated by the terms such as "up", "down", "left", and "right" is a direction or positional relationship based on the illustration in the drawings, and is merely intended for ease or simplicity of describing this application, but not intended to indicate or imply that the indicated device or component is necessarily located in the specified position or constructed or operated in the specified direction or position. Therefore, the terms depicting the positional relationship in the drawings are merely for illustrative purposes, but not to be understood as any limitation on this patent. A person of ordinary skill in the art may understand the specific meanings of such terms depending on specific situations.

The foregoing descriptions are merely exemplary embodiments of this application, but are not intended to limit this application.

**Claims**

1.  A secondary battery, comprising a current interrupt device and an electrolyte solution, **characterized in that**, a trigger pressure of the current interrupt device is a kPa, $1 \leq a \leq 4$;

    the electrolyte solution comprises a chain ester; wherein a saturation vapor pressure of the chain ester at 25 °C ranges from 4 kPa to 100 kPa; and
    based on a mass of the electrolyte solution, a mass percent of the chain ester is b%, and $35 \leq b \leq 80$.

2.  The secondary battery according to claim 1, **characterized in that**, the secondary battery satisfies at least one of the following conditions:

$$(1) \; 1.1 \leq a \leq 2.5;$$

    or

$$(2) \; 48 \leq b \leq 80.$$

3.  The secondary battery according to claim 1 or 2, **characterized in that**, $43 \leq b/a \leq 58$.

**4.** The secondary battery according to any one of claims 1 to 3, **characterized in that**, the chain ester comprises a chain carbonate;

the chain carbonate comprises at least one selected from the group consisting of dimethyl carbonate and ethyl methyl carbonate;
based on the mass of the electrolyte solution, a mass percent of the chain carbonate is $b_1$%, $15 \leq b_1 \leq 70$.

**5.** The secondary battery according to claim 4, **characterized in that**, $40 \leq b_1 \leq 55$.

**6.** The secondary battery according to any one of claims 1 to 5, **characterized in that**, the chain ester comprises a chain carboxylate;

the chain carboxylate comprises at least one selected from the group consisting of ethyl acetate, methyl acetate, ethyl formate, methyl formate, methyl propionate, ethyl propionate, propyl propionate, and propyl formate;
based on the mass of the electrolyte solution, a mass percent of the chain carboxylate is $b_2$%, $5 \leq b_2 \leq 45$.

**7.** The secondary battery according to claim 6, **characterized in that**, $20 \leq b_2 \leq 30$.

**8.** The secondary battery according to any one of claims 1 to 7, **characterized in that**, the electrolyte solution further comprises a substance A;

the substance A is at least one selected from the group consisting of 1,3-propane sultone, 1,3-propene sultone, ethylene sulfate, 1,3-propylene glycol cyclic sulfate, 2,4-butane sultone, 1,4-butane sultone, vinylene carbonate, and fluoroethylene carbonate; and
based on the mass of the electrolyte solution, a mass percent of the substance A is x%, $1 \leq x \leq 13$.

**9.** The secondary battery according to claim 8, **characterized in that**, $5 \leq x \leq 10$.

**10.** The secondary battery according to claim 8 or 9, **characterized in that**, $0.8 \leq x/a \leq 10$.

**11.** The secondary battery according to any one of claims 8 to 10, **characterized in that**, $6.5 \leq x/a \leq 8.5$.

**12.** The secondary battery according to any one of claims 1 to 11, **characterized in that**, the electrolyte solution further comprises a substance B;

the substance B is at least one selected from the group consisting of lithium bis(oxalato)borate, lithium tetrafluoroborate, lithium difluoro(oxalato)borate, lithium difluorophosphate, lithium bis(fluorosulfonyl)imide, lithium bis(trifluoromethanesulfonyl)imide, lithium trifluoromethanesulfonate, lithium 4,5-dicyano-2-(trifluoromethyl)imidazole, and lithium tetraborate; and
based on the mass of the electrolyte solution, a mass percent of the substance B is y%, $0.01 \leq y \leq 7$.

**13.** The secondary battery according to claim 12, **characterized in that**, $0.65 \leq y/a \leq 6$.

**14.** The secondary battery according to claim 12 or 13, **characterized in that**, $1.8 \leq y/a \leq 4.2$.

**15.** An electrochemical device, **characterized in that**, the electrochemical device comprises the secondary battery according to any one of claims 1 to 14.


**Patentansprüche**

**1.** Sekundärbatterie, umfassend eine Stromunterbrechungsvorrichtung und eine Elektrolytlösung, **dadurch gekennzeichnet, dass** ein Auslösedruck der Stromunterbrechungsvorrichtung a kPa beträgt, wobei $1 \leq a \leq 4$;

die Elektrolytlösung einen Kettenester umfasst; wobei ein Sättigungsdampfdruck des Kettenesters bei 25 °C von 4 kPa bis 100 kPa reicht; und
basierend auf einer Masse der Elektrolytlösung ein Massenprozentsatz des Kettenesters b% beträgt, und wobei $35 \leq b \leq 80$.

2. Sekundärbatterie nach Anspruch 1, **dadurch gekennzeichnet, dass** die Sekundärbatterie mindestens eine der folgenden Bedingungen erfüllt:

$$(1)\ 1{,}1 \leq a \leq 2{,}5;$$

oder

$$(2)\ 48 \leq b \leq 80.$$

3. Sekundärbatterie nach Anspruch 1 oder 2, **dadurch gekennzeichnet, dass** $43 \leq b/a \leq 58$.

4. Sekundärbatterie nach einem der Ansprüche 1 bis 3, **dadurch gekennzeichnet, dass** der Kettenester ein Kettencarbonat umfasst;

    das Kettencarbonat mindestens eines umfasst, das aus der Gruppe bestehend aus Dimethylcarbonat und Ethylmethylcarbonat ausgewählt ist;
    basierend auf der Masse der Elektrolytlösung ein Massenprozentsatz des Kettencarbonats $b_1$% beträgt, wobei $15 \leq b_1 \leq 70$.

5. Sekundärbatterie nach Anspruch 4, **dadurch gekennzeichnet, dass** $40 \leq b1 \leq 55$.

6. Sekundärbatterie nach einem der Ansprüche 1 bis 5, **dadurch gekennzeichnet, dass** der Kettenester ein Kettencarboxylat umfasst;

    das Kettencarboxylat mindestens eines umfasst, das aus der Gruppe bestehend aus Ethylacetat, Methylacetat, Ethylformat, Methylformat, Methylpropionat, Ethylpropionat, Propylpropionat und Propylformat ausgewählt ist;
    basierend auf der Masse der Elektrolytlösung ein Massenprozentsatz des Kettencarboxylats $b_2$% beträgt, wobei $5 \leq b_2 \leq 45$.

7. Sekundärbatterie nach Anspruch 6, **dadurch gekennzeichnet, dass** $20 \leq b2 \leq 30$.

8. Sekundärbatterie nach einem der Ansprüche 1 bis 7, **dadurch gekennzeichnet, dass** die Elektrolytlösung ferner eine Substanz A umfasst;

    die Substanz A mindestens eines ist, das aus der Gruppe bestehend aus 1,3-Propansulton, 1,3-Propensulton, Ethylensulfat, 1,3-Propylenglykol-Cyclosulfat, 2,4-Butansulton, 1,4-Butansulton, Vinylencarbonat und Fluorethylencarbonat ausgewählt ist; und
    basierend auf der Masse der Elektrolytlösung ein Massenprozentsatz der Substanz A x% beträgt, wobei $1 \leq x \leq 13$.

9. Sekundärbatterie nach Anspruch 8, **dadurch gekennzeichnet, dass** $5 \leq x \leq 10$.

10. Sekundärbatterie nach Anspruch 8 oder 9, **dadurch gekennzeichnet, dass** $0{,}8 \leq x/a \leq 10$.

11. Sekundärbatterie nach einem der Ansprüche 8 bis 10, **dadurch gekennzeichnet, dass** $6{,}5 \leq x/a \leq 8{,}5$.

12. Sekundärbatterie nach einem der Ansprüche 1 bis 11, **dadurch gekennzeichnet, dass** die Elektrolytlösung ferner eine Substanz B umfasst;

    die Substanz B mindestens eines umfasst, das aus der Gruppe bestehend aus Lithiumbis(oxalato)borat, Lithiumtetrafluoroborat, Lithiumdifluor(oxalato)borat, Lithiumdifluorophosphat, Lithiumbis(fluorsulfonyl)imid, Lithiumbis(trifluormethansulfonyl)imid, Lithiumtrifluormethansulfonat, Lithium-4,5-dicyano-2-(trifluormethyl)imidazol und Lithiumtetraborat ausgewählt ist; und
    basierend auf der Masse der Elektrolytlösung ein Massenprozentsatz der Substanz B y% beträgt, wobei $0{,}01 \leq y \leq 7$.

**13.** Sekundärbatterie nach Anspruch 12, **dadurch gekennzeichnet, dass** $0{,}65 \leq y/a \leq 6$.

**14.** Sekundärbatterie nach Anspruch 12 oder 13, **dadurch gekennzeichnet, dass** $1{,}8 \leq y/a \leq 4{,}2$.

**15.** Elektrochemische Vorrichtung, **dadurch gekennzeichnet, dass** die elektrochemische Vorrichtung die Sekundärbatterie nach einem der Ansprüche 1 bis 14 umfasst.


**Revendications**

**1.** Une batterie secondaire, comprenant un dispositif d'interruption de courant et une solution électrolytique, **caractérisée en ce que**, une pression de déclenchement du dispositif d'interruption de courant est de a kPa, avec $1 \leq a \leq 4$ ;

la solution électrolytique comprend un ester linéaire; dans lequel la pression de vapeur saturante de l'ester linéaire à 25 °C varie de 4 kPa à 100 kPa; et
sur la base de la masse de la solution électrolytique, un pourcentage massique de l'ester linéaire est b %, avec $35 \leq b \leq 80$.

**2.** La batterie secondaire selon la revendication 1, **caractérisée en ce qu'**elle satisfait au moins l'une des conditions suivantes :

$$(1)\ 1{,}1 \leq a \leq 2{,}5\ ;$$

ou

$$(2)\ 48 \leq b \leq 80.$$

**3.** La batterie secondaire selon la revendication 1 ou 2, **caractérisée en ce que** : $43 \leq b/a \leq 58$.

**4.** La batterie secondaire selon l'une quelconque des revendications 1 à 3, **caractérisée en ce que**, l'ester linéaire comprend un carbonate linéaire ;

le carbonate linéaire est choisi parmi au moins un élément du groupe constitué par le carbonate de diméthyle et le carbonate d'éthyle et de méthyle;
sur la base de la masse de la solution électrolytique, un pourcentage massique du carbonate linéaire est $b_1$ %, avec $15 \leq b_1 \leq 70$.

**5.** La batterie secondaire selon la revendication 4, **caractérisée en ce que**, $40 \leq b_1 \leq 55$.

**6.** 6. La batterie secondaire selon l'une quelconque des revendications 1 à 5, **caractérisée en ce que**, l'ester linéaire comprend un carboxylate linéaire;

le carboxylate linéaire est choisi parmi au moins un élément du groupe constitué par l'acétate d'éthyle, l'acétate de méthyle, le formiate d'éthyle, le formiate de méthyle, le propionate de méthyle, le propionate d'éthyle, le propionate de propyle et le formiate de propyle;
sur la base de la masse de la solution électrolytique, un pourcentage massique du carboxylate linéaire est $b_2$ %, avec $5 \leq b_2 \leq 45$.

**7.** La batterie secondaire selon la revendication 6, **caractérisée en ce que**, $20 \leq b_2 \leq 30$.

**8.** La batterie secondaire selon l'une quelconque des revendications 1 à 7, **caractérisée en ce que**, la solution électrolytique comprend en outre une substance A;

la substance A est choisie parmi au moins un élément du groupe constitué par la 1,3-propane sultone, la 1,3-propène sultone, le sulfate d'éthylène, le sulfate cyclique de 1,3-propylène, la 2,4-butane sultone, la 1,4-butane sultone, le carbonate de vinyle et le carbonate de fluoroéthylène; et

sur la base de la masse de la solution électrolytique, un pourcentage massique de la substance A est x %, avec $1 \leq x \leq 13$.

9. La batterie secondaire selon la revendication 8, **caractérisée en ce que**, $5 \leq x \leq 10$.

10. La batterie secondaire selon la revendication 8 ou 9, **caractérisée en ce que**, $0,8 \leq x/a \leq 10$.

11. La batterie secondaire selon l'une quelconque des revendications 8 à 10, **caractérisée en ce que**, $6,5 \leq x/a \leq 8,5$.

12. La batterie secondaire selon l'une quelconque des revendications 1 à 11, **caractérisée en ce que**, la solution électrolytique comprend en outre une substance B;

la substance B est choisie parmi au moins un élément du groupe constitué par le bis(oxalato)borate de lithium, le tétrafluoroborate de lithium, le difluoro(oxalato)borate de lithium, le difluorophosphate de lithium, le bis(fluorosulfonyl)imide de lithium, le bis(trifluorométhanesulfonyl)imide de lithium, le trifluorométhanesulfonate de lithium, le 4,5-dicyano-2-(trifluorométhyl)imidazole de lithium et le tétraborate de lithium; et
sur la base de la masse de la solution électrolytique, un pourcentage massique de la substance B est y %, avec $0,01 \leq y \leq 7$.

13. La batterie secondaire selon la revendication 12, **caractérisée en ce que**, $0,65 \leq y/a \leq 6$.

14. La batterie secondaire selon la revendication 12 ou 13, **caractérisée en ce que**, $1,8 \leq y/a \leq 4,2$.

15. Un dispositif électrochimique, **caractérisé en ce qu'**il comprend la batterie secondaire selon l'une quelconque des revendications 1 à 14.

**REFERENCES CITED IN THE DESCRIPTION**

**Patent documents cited in the description**

- EP 2304837 B1